# EUROPEAN PATENT SPECIFICATION

(11) **EP 4 148 467 B1**
(45) Date of publication and mention of the grant of the patent: **02.12.2026**
(21) Application number: 21804428.7
(22) Date of filing: 14.05.2021
(51) Int. Cl.: G02B 5/136, G02B 30/22, G02B 5/04, G02B 5/122, G02B 30/56

(54) **FLOATING IMAGE DISPLAY DEVICE**
ANZEIGEVORRICHTUNG FÜR SCHWEBENDES BILD
DISPOSITIF D'AFFICHAGE D'IMAGE FLOTTANTE

(30) Priority: 15.05.2020 KR 20200058332; 25.09.2020 KR 20200125091
(43) Date of publication of application: 15.03.2023
(73) Proprietor: Samsung Electronics Co., Ltd., Gyeonggi-do 16677 (KR)
(72) Inventor: KEUM, Changmin, Suwon-si, Gyeonggi-do 16677 (KR); KIM, Myungho, Suwon-si, Gyeonggi-do 16677 (KR)
(74) Representative: Appleyard Lees IP LLP
(86) International application number: PCT/KR2021/006055
(87) International publication number: WO 2021/230698

(56) References cited:
- WO-A1-2017/196399
- WO-A1-2019/208097
- JP-A- 2017 142 438
- JP-A- 2017 161 733
- JP-A- 2017 173 527
- JP-B2- 5 024 712
- KR-A- 20180 095 936
- US-A1- 2016 018 573
- US-A1- 2019 179 160

## Description

### 1. Technical Field

The present disclosure relates to a reflective structure, a reflective structure array, and a floating image display device.

### 2. Background Art

As the demand in the augmented reality (AR) and virtual reality (VR) markets is increasing and interest in public hygiene is increasing, the demand for mid-air display, which is an electronic device capable of non-contact interaction, is increasing.

Unlike normal mirrors, light incident from an original image (or object) passes through a dihedral corner reflector array (DCRA) device and is collected again on the opposite side of the DCRA. The DCRA may generate a floating image (mid-air image) by forming an image at a position exactly equal to the distance between the original image and the DCRA.

US2019/179160 describes an aerial image display device includes a display component, an imaging component, and a first limiter. The display component has a display surface for displaying an image. The imaging component has a first reflecting surface and a second reflecting surface that are arranged perpendicular to each other along an image formation plane of the imaging component. The imaging component forms an aerial image of the image in a display area that is symmetrical with the display surface with respect to the image formation plane. The first limiter is disposed closer to the display component than the imaging component. The first limiter limits an incident angle of incident light incident on the imaging component. The first reflection surface and the second reflection surface are inclined by an angle between 30° and 60° with respect to a median plane that includes a perpendicular of each of the display surface and the image formation plane.

WO2019/208097 describes an aerial display device comprises: a display element for displaying an image; a mirror device that includes a plurality of optical elements each having two reflective surfaces arranged perpendicular to each other and reflects display light from the display element to form an aerial image at a position plane-symmetrical with respect to the display element; and a light-shielding member that is arranged on the optical path between the display element and the aerial image, has an opening that allows part of incident light to pass therethrough, and blocks the light entering a region other than the opening.

WO2017/196399 describes a hologram pyramid device for providing an illusion of a three dimensional object that closely approximates a perceived holographic image. The device includes a square frustum defined by four substantially planar sides that extend longitudinally between orthogonal base edges and relatively wider orthogonal top edges, and that are interconnected at sharp, right angle corner edges, and have an acute frustum slope angle greater than 45 degrees. The sides have a specularly reflective outside surface, an inside, second surface that is configured to minimize specular internal reflection, and are partially transparent to light rays coming through the frustum. The device is adapted for use with a substantially horizontal display positioned adjacent and parallel to the frustum base end, wherein the display is configured to vertically project four two-dimensional images, each to a corresponding frustum side.

US2016/018573 describes a micromirror array according to the present invention is a corner reflector type micromirror array capable of projecting a mirror image of an object to be projected sharply with high luminance. The micromirror array includes a substrate, and a plurality of unit optical elements (quadrangular prisms) formed in an array on the substrate. Each of the unit optical elements is of a protruding or recessed shape perpendicular to the surface of the substrate. The unit optical elements has two side surfaces orthogonal to each other on opposite sides of a corner of the side surfaces, and the two side surfaces are light reflecting surfaces. Each of the light reflecting surfaces is of a rectangular shape such that the ratio of the vertical length thereof as measured in a substrate thickness direction to the horizontal width thereof as measured in a substrate surface direction is not less than 1.5.

### 3. Disclosure

### Technical Problem

A technical object of the present disclosure is to provide a floating image display device having high light extraction efficiency.

A technical object of the present disclosure is to provide a floating image display device, which does not generate a ghost image.

A technical object of the present disclosure is to provide a floating image display device, which prevents direct image generation.

However, the technical objects of the present disclosure are not limited to those described above.

### 4. Technical Solution

The invention is defined by a floating image display device according to claim 1. Optional features of the floating image display device are provided in claims 2 to 11.

### 5. Advantageous Effects

The present disclosure may provide a reflective structure having high light extraction efficiency, a reflective structure array, and a floating image display device.

The present disclosure may provide a reflective structure, which does not generate a ghost image, a reflective structure array, and a floating image display device.

The present disclosure may provide a reflective structure, which prevents a direct image from being generated, a reflective structure array, and a floating image display device.

However, the effects of the present disclosure are not limited to those described above.

### 6. Description of Drawings

FIG. 1 is a perspective view of a reflective structure for use in a floating image display device according to the claimed invention, according to an example embodiment.
FIG.2 is a plan view of the reflective structure of FIG.1
FIG. 3 is a side view of the reflective structure of FIG. 1.
FIG. 4 is a diagram for describing a path of light incident on the reflective structure of FIG. 1.
FIG. 5 is a side view of the reflective structure of FIG. 4.
FIG. 6 is a perspective view of a reflective structure for use in a floating image display device according to the claimed invention, according to an example embodiment.
FIG. 7 is a plan view of the reflective structure of FIG. 6.
FIG. 8 is a side view of the reflective structure of FIG. 6.
FIG. 9 is a diagram for describing a path of light incident on the reflective structure of FIG. 6.
FIG. 10 is a side view of the reflective structure of FIG. 9.
FIG. 11 is a perspective view of a reflective structure for use in a floating image display device according to the claimed invention, according to an example embodiment.
FIG. 12 is a side view of the reflective structure of FIG. 11.
FIG. 13 is a perspective view of a reflective structure for use in a floating image display device according to the claimed invention, according to an example embodiment.
FIG. 14 is a plan view of the reflective structure of FIG. 13.
FIG. 15 is a side view of the reflective structure of FIG. 13.
FIG. 16 is a perspective view of a reflective structure according to an example which is not for use in a floating image display device according to the claimed invention,
FIG. 17 is a bottom view of the reflective structure of FIG. 16.
FIG. 18 is a side view of the reflective structure of FIG. 16.
FIG. 19 is a perspective view of a reflective structure for use in a floating image display device according to the claimed invention, according to an example embodiment.
FIG. 20 is a plan view of the reflective structure of FIG. 19.
FIG. 21 is a diagram illustrating an overall shape of a reflective structure array for use in a floating image display device according to the claimed invention, according to an example embodiment.
FIG. 22 is a plan view of the reflective structure of FIG. 21.
FIG. 23 is a diagram illustrating an overall shape of a reflective structure array for use in a floating image display device according to the claimed invention, according to an example embodiment.
FIG. 24 is a plan view of the reflective structure of FIG. 23.
FIG. 25 is a diagram illustrating an overall shape of a reflective structure array for use in a floating image display device according to the claimed invention, according to an example embodiment.
FIG. 26 is a plan view of the reflective structure of FIG. 25.
FIG. 27 is a conceptual diagram of a floating image display device according to an example embodiment.

### 8. Mode for Invention

Hereinafter, embodiments of the present disclosure will be described in detail with reference to the accompanying drawings. In the following drawings, the same reference numerals denote the same elements, and the size of each element in the drawings may be exaggerated for clarity and convenience of explanation. Embodiments described herein are merely examples, and various modifications may be made thereto from these embodiments.

Hereinafter, the terms "above" or "on" may include not only those that are directly on in a contact manner, but also those that are above in a non-contact manner.

The singular forms "a," "an," and "the" as used herein are intended to include the plural forms as well unless the context clearly indicates otherwise. It will be understood that the terms "comprise," "include," or "have" as used herein specify the presence of stated elements, but do not preclude the presence or addition of one or more other elements.

Also, the terms such as "...er/or" described in the specification mean units that process at least one function or operation, and may be implemented as hardware, software, or a combination of hardware and software.

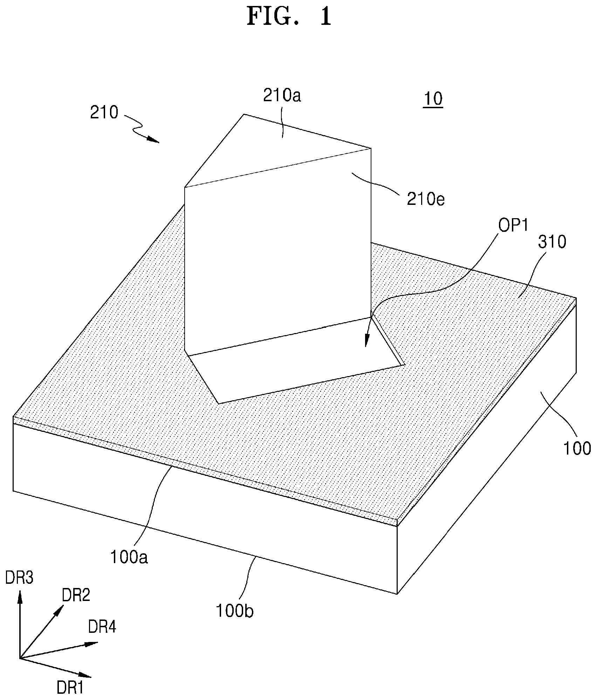

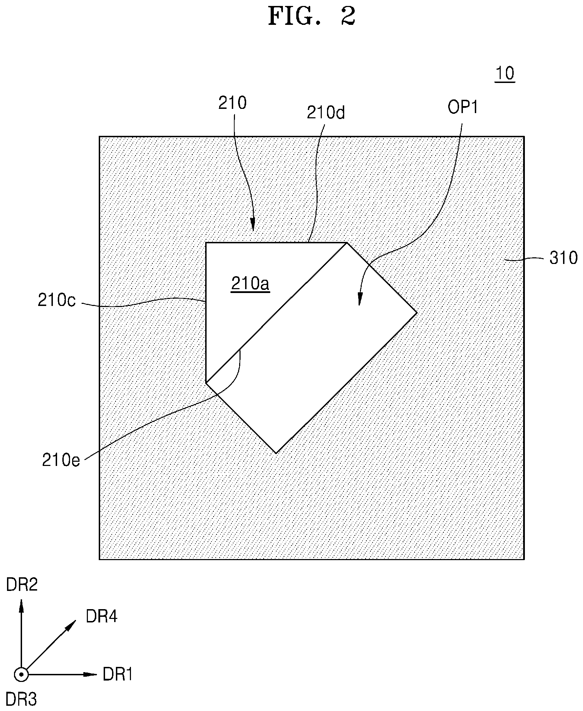

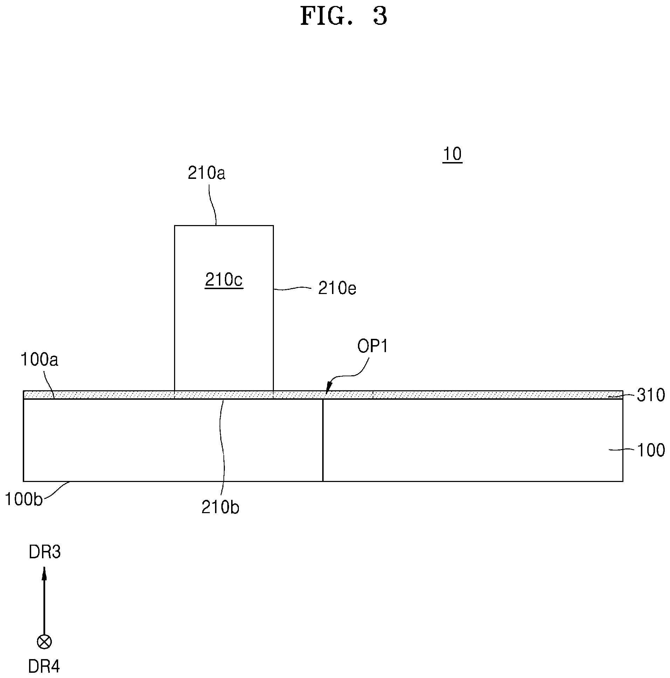

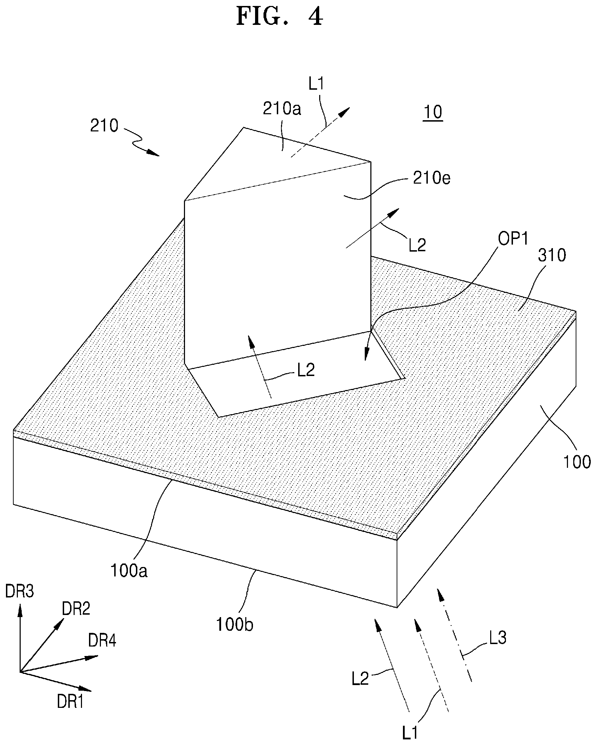

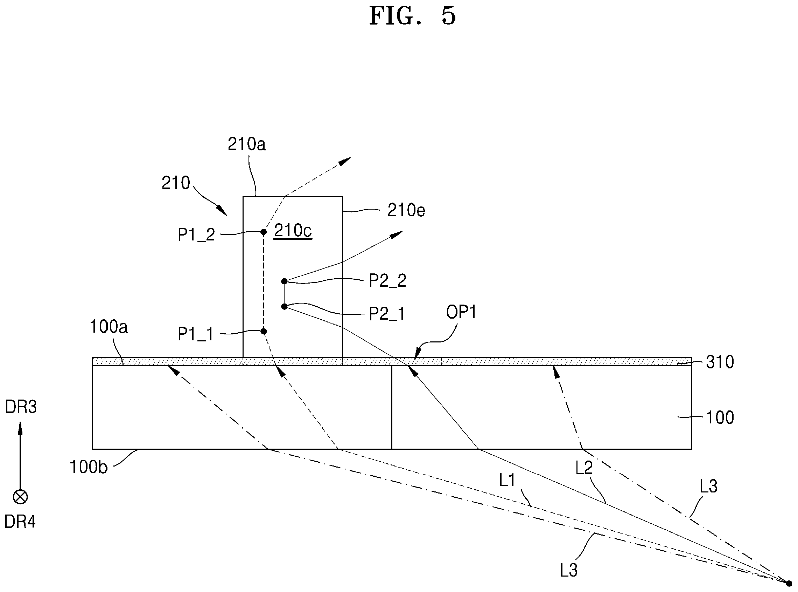

FIG. 1 is a perspective view of a reflective structure for use in a floating image display device according to the claimed invention, according to an example embodiment. FIG. 2 is a plan view of the reflective structure of FIG. 1. FIG. 3 is a side view of the reflective structure of FIG. 1. FIG. 4 is a diagram for describing a path of light incident on the reflective structure of FIG. 1. FIG. 5 is a side view of the reflective structure of FIG. 4.

Referring to FIGS. 1 to 3, a reflective structure 10 is provided. The reflective structure 10 includes a substrate 100, a first light blocking layer 310, and a first reflective pillar 210. The substrate 100 includes a first surface 100a and a second surface 100b opposite to each other. For example, the first surface 100a and the second surface 100b may be parallel to each other. The first surface 100a extends in a first direction DR1 and a second direction DR2, which cross each other. For example, the first direction DR1 and the second direction DR2 may be perpendicular to each other. The substrate 100 may include a transparent material. For example, the substrate 100 may include glass or transparent plastic. However, the material included in the substrate 100 is not limited to those described above.

The first reflective pillar 210 is provided on the substrate 100. The first reflective pillar 210 extends in a third direction DR3 crossing the first surface 100a of the substrate 100. For example, the third direction DR3 may be perpendicular to the first surface 100a. The first reflective pillar 210 includes an upper surface 210a, a bottom surface 210b, a first reflective side surface 210c, a second reflective side surface 210d, and a front surface 210e. The bottom surface 210b of the first reflective pillar 210 is a surface facing the first surface 100a of the substrate 100. The upper surface 210a of the first reflective pillar 210 is a surface opposite to the bottom surface 210b of the first reflective pillar 210. The first reflective side surface 210c, the second reflective side surface 210d, and the front surface 210e are arranged between the upper surface 210a and the bottom surface 210b. The first reflective side surface 210c may be perpendicular to the second reflective side surface 210d. The front surface 210e may be arranged between the first reflective side surface 210c and the second reflective side surface 210d. The front surface 210e may extend from the edge of the first reflective side surface 210c disposed on the opposite side of the corner where the first reflective side surface 210c crosses the second reflective side surface 210d to the edge of the second reflective side surface 210d disposed on the opposite side of the corner where the first reflective side surface 210c crosses the second reflective side surface 210d. The front surface 210e may be flat. For example, the front surface 210e may extend in a fourth direction DR4 parallel to the edge where the front surface 210e crosses the first surface 100a of the substrate 100. The upper surface 210a and the bottom surface 210b of the first reflective pillar 210 may be triangular. The first reflective pillar 210 may be substantially a triangular pillar. The first reflective pillar 210 may be transparent. The first reflective pillar 210 may include a photoresist material. For example, the first reflective pillar 210 may include polymethylmethacrylate (PMMA) or SU-8. The aspect ratio of the first reflective pillar 210 may be 0.6 or more and 3.5 or less. The aspect ratio of the first reflective pillar 210 may be a ratio of a height to a width of the first reflective pillar 210. Specifically, the aspect ratio of the first reflective pillar 210 may be represented by the following equation: 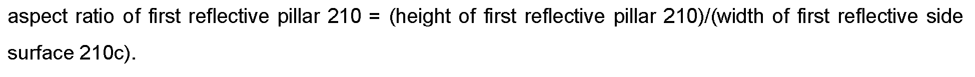 aspect ratio of first reflective pillar 210 = (height of first reflective pillar 210)/(width of first reflective side surface 210c).

The first light blocking layer 310 is provided on the substrate 100. The first light blocking layer 310 may surround the first reflective pillar 210. The first light blocking layer 310 and the first reflective pillar 210 may not overlap each other in the third direction DR3. The first light blocking layer 310 reflects or absorbs light. For example, the first light blocking layer 310 may reflect or absorb visible light. When the light blocking layer 310 reflects visible light, the first light blocking layer 310 may include a metal. For example, the first light blocking layer 310 may include aluminum (Al), chromium (Cr), silver (Ag), or any combination thereof. When the first light blocking layer 310 absorbs visible light, the first light blocking layer 310 may include a light-absorbing material.

A first opening OP1 is provided between the first reflective pillar 210 and the first light blocking layer 310. The first opening OP1 may be provided next to the front surface 210e of the first reflective pillar 210. The first opening OP1 exposes the first surface 100a of the substrate 100. When the first light blocking layer 310 extends to an area where the first opening OP1 is arranged, light may enter the first reflective pillar 210 only through the bottom surface 210b of the first reflective pillar 210. The first opening OP1 is arranged on a path of light entering the first reflective pillar 210 through the front surface 210e of the first reflective pillar 210. The first opening OP1 allows light to enter the first reflective pillar 210 through the front surface 210e of the first reflective pillar 210. Hereinafter, the light path in the reflective structure 10 is described.

Referring to FIGS. 4 and 5, a first beam L1, a second beam L2, and a third beam L3 may be incident on the second surface 100b of the substrate 100. For example, the first beam L1, the second beam L2, and the third beam L3 may be emitted from real image elements (not illustrated) and reach the substrate 100. The first beam L1, the second beam L2, and the third beam L3 illustrated in FIG. 5 may be viewed from the reflective structure 10 in the fourth direction DR4.

The first beam L1 may be provided to the first reflective pillar 210 through the substrate 100. The first beam L1 may enter the first reflective pillar 210 through the bottom surface 210b of the first reflective pillar 210. The first beam L1 may be reflected by the first reflective side surface 210c and the second reflective side surface 210d in the first reflective pillar 210. Points at which the first beam L1 is reflected by the first reflective side surface 210c and the second reflective side surface 210d are indicated by a (1_1)th point P1_1 and a (1_2)th point P1_2. For example, the (1_1)th point P1_1 may be a point at which the first beam L1 is reflected by the first reflective side surface 210c, and the (1_2)th point P1_2 may be a point at which the first beam L1 is reflected by the second reflective side surface 210d. The first beam L1 may be reflected from the (1_2)th point P1_2 and then emitted to the outside of the first reflective pillar 210 through the upper surface 210a. The first beam L1 may contribute to generating a required floating image.

The second beam L2 may be provided to the first opening OP1 through the substrate 100. The second beam L2 may be emitted to the outside of the substrate 100 through the first opening OP1 and reach the front surface 210e of the first reflective pillar 210. The second beam L2 may enter the first reflective pillar 210 through the front surface 210e of the first reflective pillar 210. The second beam L2 may be reflected by the first reflective side surface 210c and the second reflective side surface 210d in the first reflective pillar 210. Points at which the second beam L2 is reflected by the first reflective side surface 210c and the second reflective side surface 210d are indicated by a (2_1)th point P2_1 and a (2_2)th point P2_2. For example, the (2_1)th point P2_1 may be a point at which the second beam L2 is reflected by the first reflective side surface 210c, and the (2_2)th point P1_2 may be a point at which the second beam L2 is reflected by the second reflective side surface 210d. The second beam L2 may be reflected from the (2_2)th point P2_2 and then emitted to the outside of the first reflective pillar 210 through the front surface 210e. The second beam L2 may contribute to generating a required floating image together with the first beam L1.

The third beam L3 may reach the first light blocking layer 310 through the substrate 100. The third beam L3 may be reflected or absorbed by the first light blocking layer 310. The third beam L3 may not be emitted to the outside of the substrate 100 through the first surface 100a of the substrate 100. When the first light blocking layer 310 is absent, the third beam L3 may be emitted to the outside of the substrate 100 to contribute to generating a direct image and/or a ghost image. The direct image may refer to an image generated when light emitted from an actual image element is transmitted through the reflective structure without being reflected by the reflective structure 10. The ghost image may refer to an image generated at a non-required position. The third beam L3 may not contribute to generating a floating image.

When the reflective pillar has a rectangular prism shape, light emitted to the outside of the reflective pillar through the four side surfaces of the reflective pillar may not contribute to generating a floating image. Only light emitted to the outside of the reflective pillar through the upper surface of the reflective pillar having a rectangular prism shape may contribute to generating a floating image.

In the present disclosure, a floating image may be generated by using light emitted to the outside of the first reflective pillar 210 through the upper surface 210a of the first reflective pillar 210 and light emitted to the outside of the first reflective pillar 210 through the front surface 210e of the first reflective pillar 210. Accordingly, the reflective structure 10 having high efficiency may be provided.

The first light blocking layer 310 of the present disclosure may selectively block light (e.g., the third beam L3) that is not provided to the bottom surface 210b and the front surface 210e of the first reflective pillar 210. Accordingly, the generation of a ghost image and a direct image may be reduced.

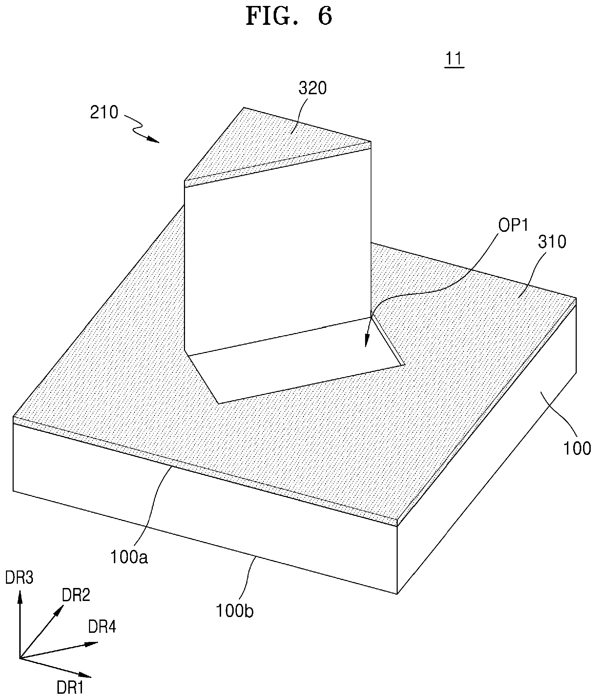

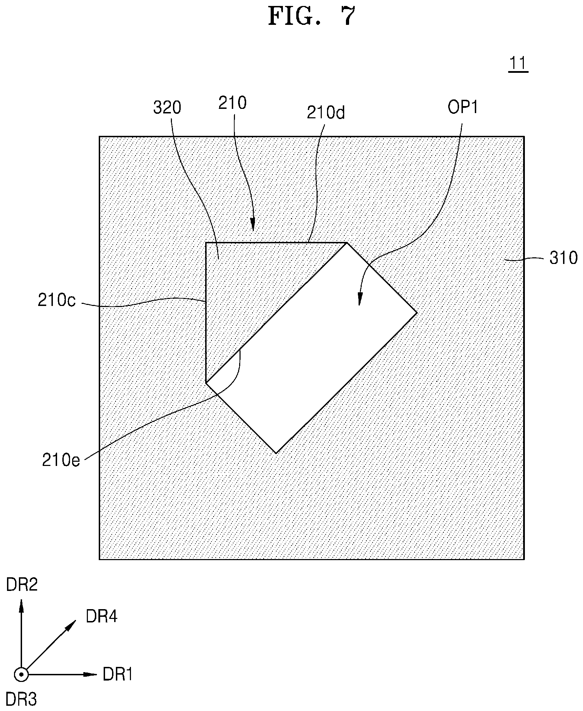

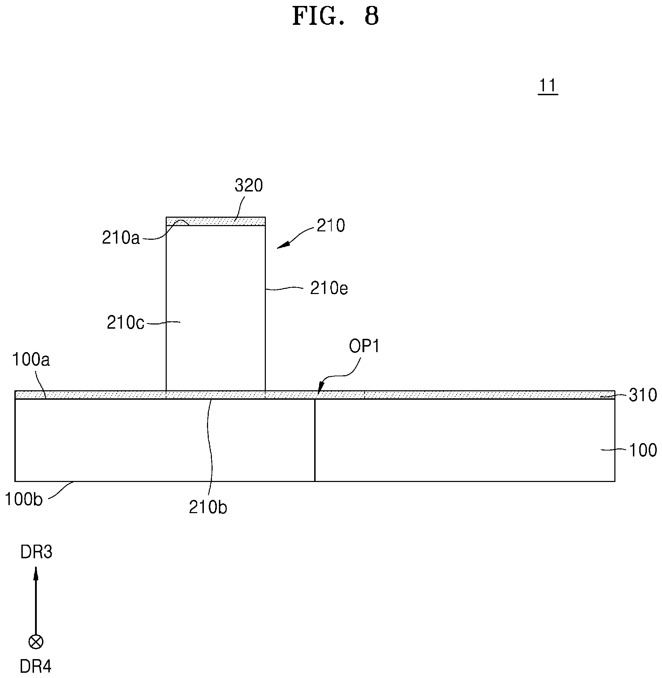

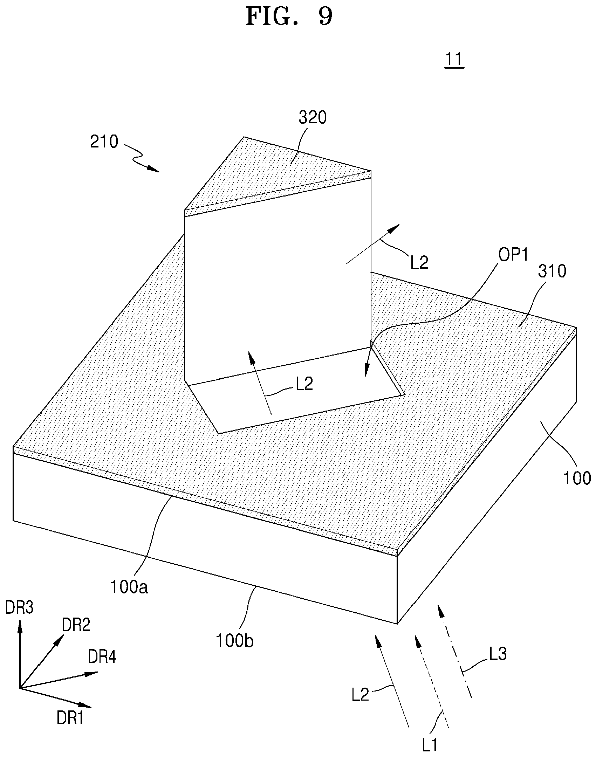

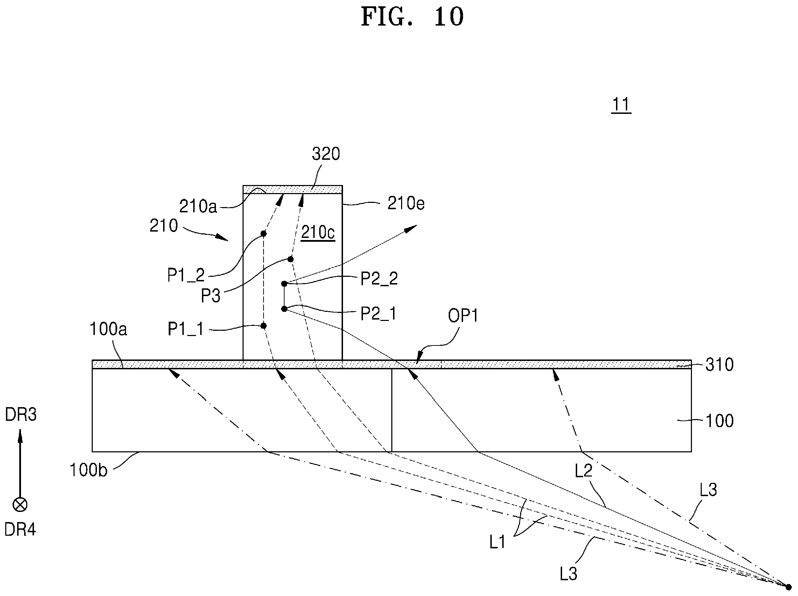

FIG. 6 is a perspective view of a reflective structure for use in a floating image display device according to the claimed invention, according to an example embodiment. FIG. 7 is a plan view of the reflective structure of FIG. 6. FIG. 8 is a side view of the reflective structure of FIG. 6. FIG. 9 is a diagram for describing a path of light incident on the reflective structure of FIG. 6. FIG. 10 is a side view of the reflective structure of FIG. 9. For brevity of explanation, substantially the same descriptions as provided above with reference to FIGS. 1 to 5 may be omitted.

Referring to FIGS. 6 to 8, a reflective structure 11 is provided. The reflective structure 11 includes a substrate 100, a first light blocking layer 310, a first reflective pillar 210, and a second light blocking layer 320. The substrate 100, the first light blocking layer 310, and the first reflective pillar 210 may be substantially the same as the substrate 100, the first light blocking layer 310, and the first reflective pillar 210 described with reference to FIGS. 1 to 3, respectively.

Unlike those described with reference to FIGS. 1 to 3, the second light blocking layer 320 may be provided on an upper surface 210a of the first reflective pillar 210. The second light blocking layer 320 may reflect or absorb light. The second light blocking layer 320 may include substantially the same material as that of the first light blocking layer 310. The second light blocking layer 320 may prevent light from being emitted to the outside of the first reflective pillar 210 through the upper surface 210a of the first reflective pillar 210. Although the second light blocking layer 320 is illustrated as completely covering the upper surface 210a of the first reflective pillar 210, this is only an example. In another example, the second light blocking layer 320 may cover a portion of the upper surface 210a of the first reflective pillar 210 and expose the remaining portion thereof.

Referring to FIGS. 9 and 10, a first beam L1, a second beam L2, and a third beam L3 may be incident on a second surface 100b of the substrate 100. For example, the first beam L1, the second beam L2, and the third beam L3 may be emitted from real image elements and reach the substrate 100. The second beam L2 and the third beam L3 may be substantially the same as the second beam L2 and the third beam L3 described with reference to FIGS. 4 and 5, respectively. A portion of the first beam L1 may be reflected by a first reflective side surface 210c and a second reflective side surface 210d in the first reflective pillar 210, and another portion of the first beam L1 may be reflected by one of the first reflective side surface 210c and the second reflective side surface 210d in the first reflective pillar 210.

Unlike those described with reference to FIGS. 4 and 5, the second light blocking layer 320 may reflect or absorb the first beam LB1. The first beam LB1 may not be emitted to the outside of the first reflective pillar 210 through the upper surface 210a of the first reflective pillar 210. The second light blocking layer 320 may prevent a ghost image from being generated by another portion of the first beam L1 (that is, the first beam L1 reflected by one of the first reflective side surface 210c and the second reflective side surface 210d in the first reflective pillar 210).

The present disclosure may provide the reflective structure 11 that generates a floating image with high sharpness by preventing a direct image and a ghost image from being generated.

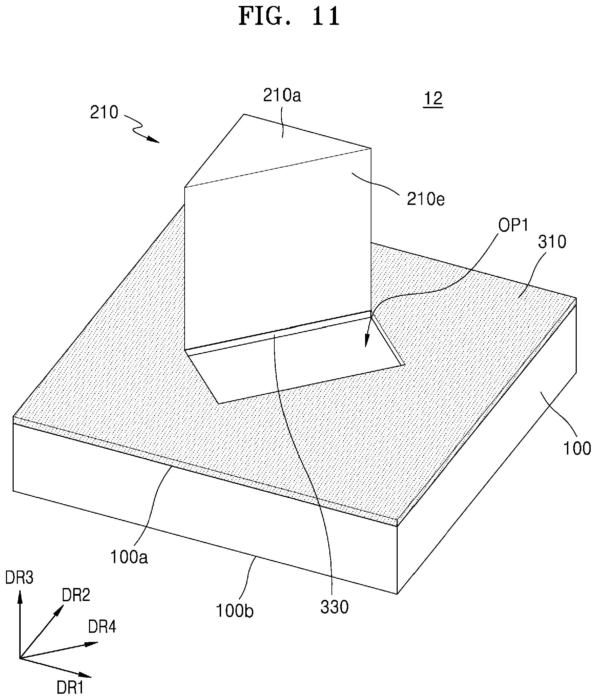

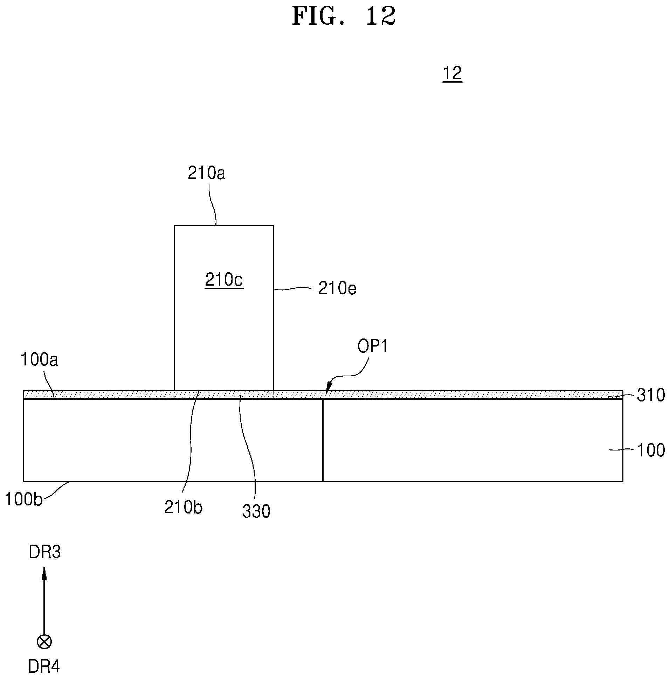

FIG. 11 is a perspective view of a reflective structure for use in a floating image display device according to the claimed invention, according to an example embodiment. FIG. 12 is a side view of the reflective structure of FIG. 11. For brevity of explanation, substantially the same descriptions as provided above with reference to FIGS. 1 to 3 and FIGS. 9 and 10 may be omitted.

Referring to FIGS. 11 and 12, a reflective structure 12 is provided. The reflective structure 12 includes a substrate 100, a first light blocking layer 310, a third light blocking layer 330, and a first reflective pillar 210. The substrate 100, the first light blocking layer 310, and the first reflective pillar 210 may be substantially the same as the substrate 100, the first light blocking layer 310, and the first reflective pillar 210 described reference to FIGS. 1 to 3, respectively.

The third light blocking layer 330 may be arranged between the substrate 100 and the first reflective pillar 210. The substrate 100 and the first reflective pillar 210 may be spaced apart from each other by the third light blocking layer 330. Although the third light blocking layer 330 is illustrated as completely covering a bottom surface 210b of the first reflective pillar 210, the present disclosure is not limited thereto. In another example embodiment, the third light blocking layer 330 may cover a portion of the bottom surface 210b of the first reflective pillar 210 and expose another portion thereof. In this case, the other portion of the exposed bottom surface 210b of the first reflective pillar 210 may extend toward the substrate 100 and may be in direct contact with a first surface 100a of the substrate 100. The third light blocking layer 330 may reflect or absorb light. The third light blocking layer 330 may include substantially the same material as that of the first light blocking layer 310 described with reference to FIGS. 1 to 3. The third light blocking layer 330 and the first light blocking layer 310 may form a single structure. For example, the third light blocking layer 330 and the first light blocking layer 310 may be connected to each other without a boundary therebetween.

The third light blocking layer 330 may block light from entering the first reflective pillar 210 through the bottom surface 210b of the first reflective pillar 210. For example, the third light blocking layer 330 may block the first beam L1 described with reference to FIGS. 9 and 10 from entering the first reflective pillar 210. Therefore, it is possible to prevent a ghost image from being generated by another portion of the first beam L1 (that is, the first beam L1 reflected by one of a first reflective side surface 210c and a second reflective side surface 210d in the first reflective pillar 210).

The present disclosure may provide a reflective structure 12 that generates a floating image with high clarity by preventing a direct image and a ghost image from being generated.

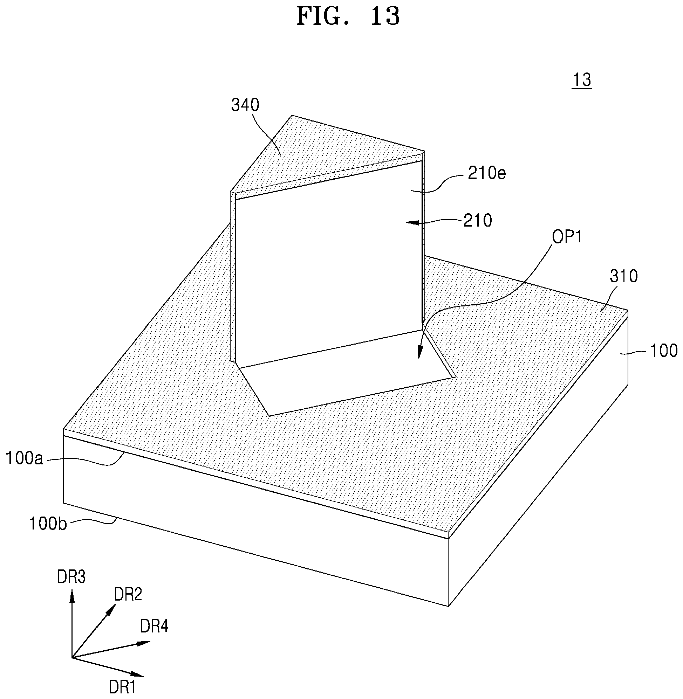

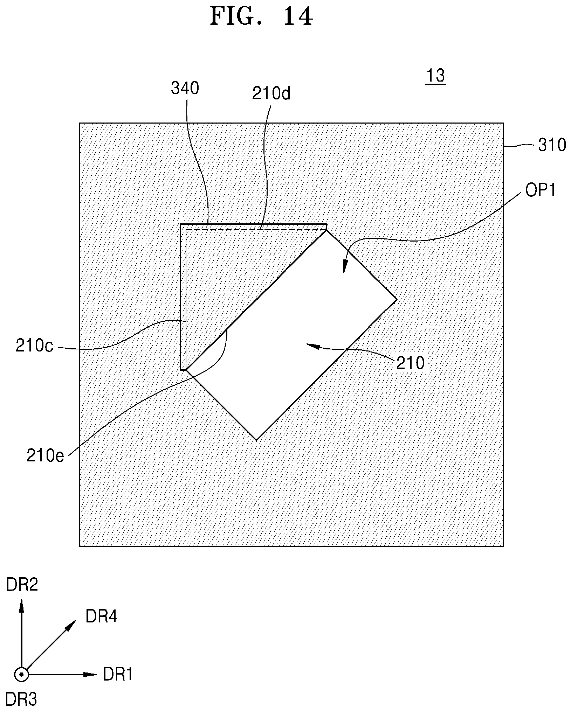

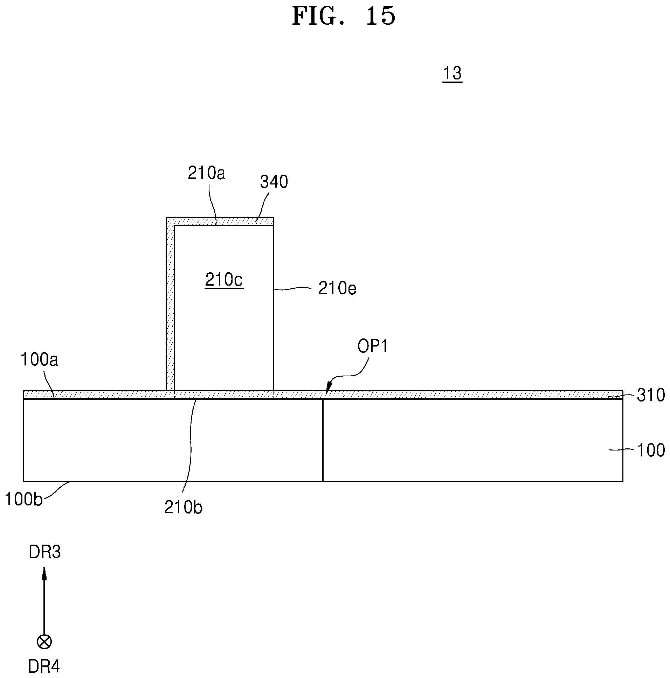

FIG. 13 is a perspective view of a reflective structure for use in a floating image display device according to the claimed invention, according to an example embodiment. FIG. 14 is a plan view of the reflective structure of FIG. 13. FIG. 15 is a side view of the reflective structure of FIG. 13. For brevity of explanation, substantially the same descriptions as provided above with reference to FIGS. 1 to 3 and FIGS. 9 and 10 may be omitted.

Referring to FIGS. 13 to 15, a reflective structure 13 is provided. The reflective structure 13 includes a substrate 100, a first light blocking layer 310, a fourth light blocking layer 340, and a first reflective pillar 210. The substrate 100, the first light blocking layer 310, and the first reflective pillar 210 may be substantially the same as the substrate 100, the first light blocking layer 310, and the first reflective pillar 210 described with reference to FIGS. 1 to 3, respectively.

Unlike those described with reference to FIGS. 1 to 3, a fourth light blocking layer 340 may be provided on an upper surface 210a, a first reflective side surface 210c, and a second reflective side surface 210d of the first reflective pillar 210. The fourth light blocking layer 340 may reflect light. For example, the fourth light blocking layer 340 may include substantially the same material as that of the first light blocking layer 310 that reflects light.

Although the fourth light blocking layer 340 is illustrated as completely covering the upper surface 210a, the first reflective side surface 210c, and the second reflective side surface 210d of the first reflective pillar 210, the present disclosure is not limited thereto. In another example embodiment, the fourth light blocking layer 340 may partially cover each of the upper surface 210a, the first reflective side surface 210c, and the second reflective side surface 210d of the first reflective pillar 210. The fourth light blocking layer 340 disposed on the first reflective side surface 210c and the second reflective side surface 210d may increase the light reflection efficiency of the first reflective side surface 210c and the second reflective side surface 210d. In other words, the fourth light blocking layer 340 may increase the intensity of reflected light, compared to the intensity of light incident on the first reflective side surface 210c and the second reflective side surface 210d. The fourth light blocking layer 340 disposed on the upper surface 210a of the first reflective pillar 210 may prevent a ghost image from being generated by another portion of the first beam L1 described with reference to FIGS. 9 and 10 (that is, the first beam L1 reflected by one of the first reflective side surface 210c and the second reflective side surface 210d in the first reflective pillar 210).

The present disclosure may provide the reflective structure 13 that generates a floating image with high clarity by preventing a direct image and a ghost image from being generated. The present disclosure may provide the reflective structure 13 having high efficiency.

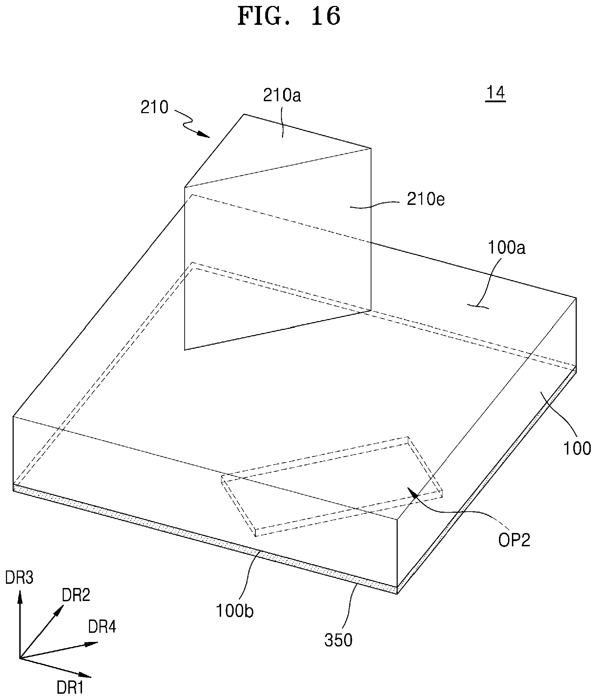

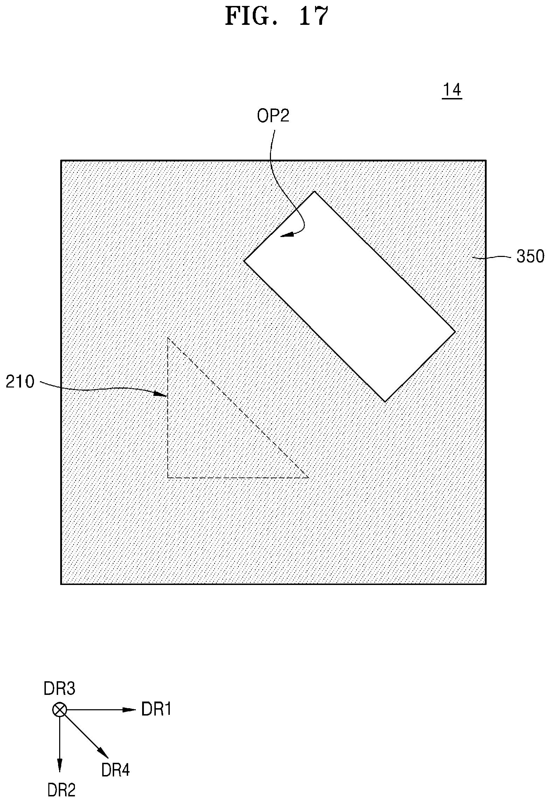

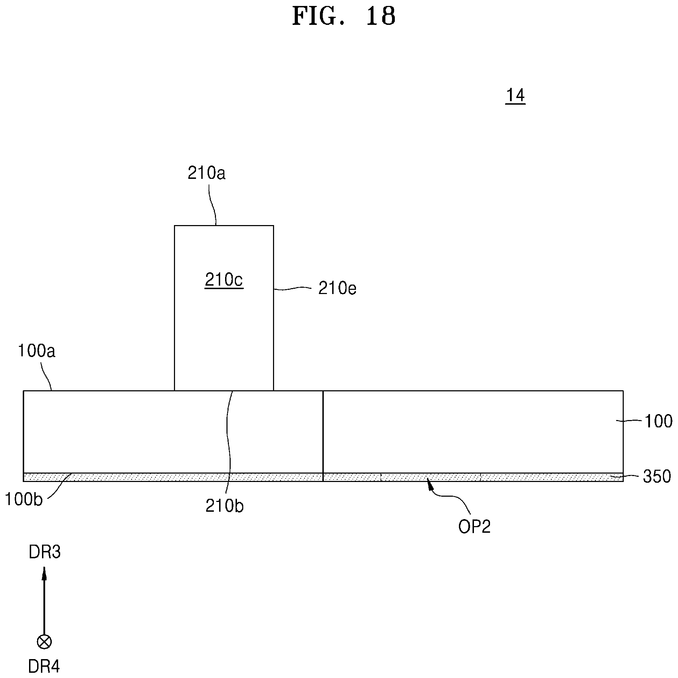

FIG. 16 is a perspective view of a reflective structure according to an example, which is not for use in a floating image display device according to the claimed invention. FIG. 17 is a bottom view of the reflective structure of FIG. 16. FIG. 18 is a side view of the reflective structure of FIG. 16. For brevity of explanation, substantially the same descriptions as provided above with reference to FIGS. 1 to 5 may be omitted.

Referring to FIGS. 16 to 18, a reflective structure 14 may be provided. The reflective structure 14 may include a substrate 100, a fifth light blocking layer 350, and a first reflective pillar 210. The substrate 100 and the first reflective pillar 210 may be substantially the same as those described with reference to FIGS. 1 to 3.

The fifth light blocking layer 350 may be provided on a second surface 100b of the substrate 100. The fifth light blocking layer 350 may reflect or absorb light. For example, the fifth light blocking layer 350 may include substantially the same material as that of the first light blocking layer 310 described with reference to FIGS. 1 to 3. The fifth light blocking layer 350 may include a second opening OP2 exposing the second surface 100b of the substrate 100.

With respect to the third direction DR3, the second opening OP2 may be misaligned with the first reflective pillar 210. The second opening OP2 may not overlap the first reflective pillar 210 in the third direction DR3. For example, the second opening OP2 may be spaced apart from an area facing the first reflective pillar 210. Light (the first beam L1 and the second beam L2 of FIGS. 4 and 5) provided to the first reflective pillar 210 through the substrate 100 may pass through the second opening OP2.

The fifth light blocking layer 350 may selectively pass light (the first beam L1 and the second beam L2 of FIGS. 4 and 5) that travels toward the first reflective pillar 210. The fifth light blocking layer 350 may block light (the third beam L3 of FIGS. 4 and 5) that does not travel toward the first reflective pillar 210.

The present disclosure may provide the reflective structure 14 that generates a floating image by using light (the first beam L1 and the second beam L2 of FIGS. 4 and 5) emitted from the first reflective pillar 210 through an upper surface 210a and a front surface 210e of the first reflective pillar 210. The present disclosure may provide the reflective structure 14 that prevents a direct image from being generated.

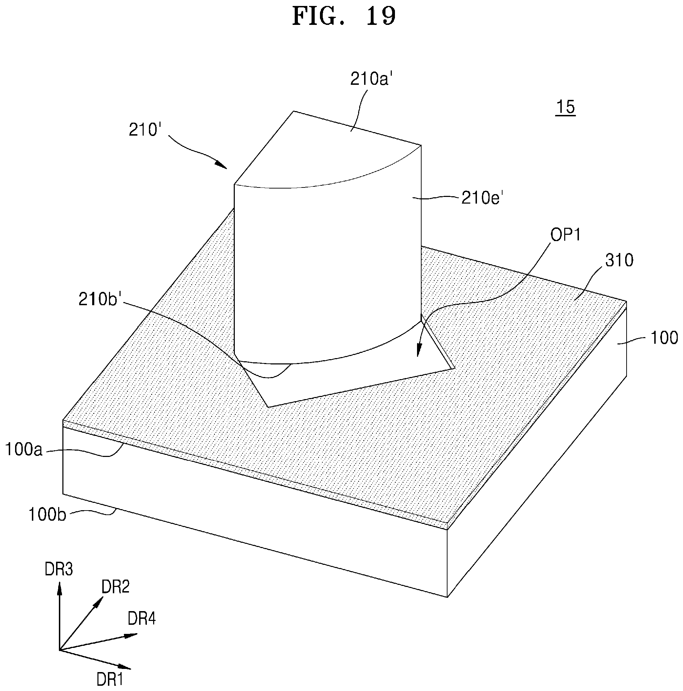

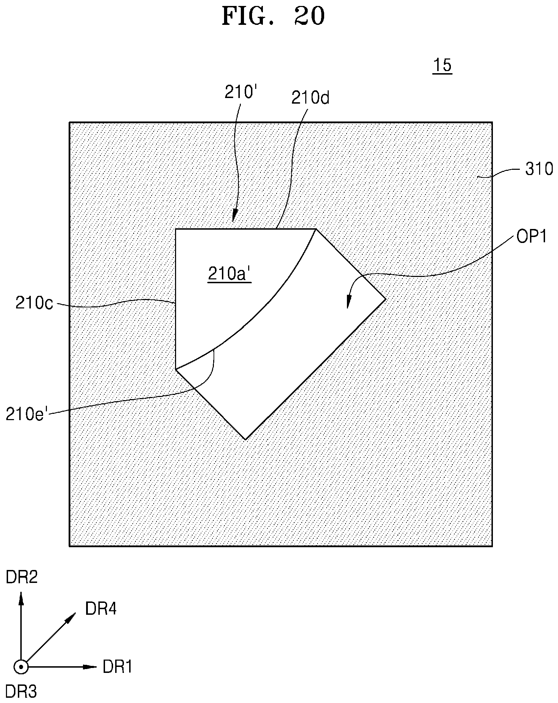

FIG. 19 is a perspective view of a reflective structure for use in a floating image display device according to the claimed invention, according to an example embodiment. FIG. 20 is a plan view of the reflective structure of FIG. 19. For brevity of explanation, substantially the same descriptions as provided above with reference to FIGS. 1 to 5 may be omitted.

Referring to FIGS. 19 and 20, a reflective structure 15 is provided. The reflective structure 15 includes substrate 100, a first light blocking layer 310, and a second reflective pillar 210'. The substrate 100 and the first light blocking layer 310 may be substantially the same as the substrate 100 and the first light blocking layer 310 described with reference to FIGS. 1 to 3, respectively.

The second reflective pillar 210' includes an upper surface 210a', a bottom surface 210b', a first reflective side surface 210c, a second reflective side surface 210d, and a front surface 210e'. The first reflective side surface 210c and the second reflective side surface 210d may be substantially the same as the first reflective side surface 210c and the second reflective side surface 210d described with reference to FIGS. 1 to 3, respectively.

Unlike those described with reference to FIGS. 1 to 3, the upper surface 210a' and the bottom surface 210b' may each have a fan shape. The front surface 210e' may have a convex shape. When viewed from the third direction DR3, the front surface 210e' may focus light emitted from the second reflective pillar 210' through the front surface 210e'. The second reflective pillar 210' may be substantially the same as a portion of a cylindrical shape.

The present disclosure may provide the reflective structure 15 having high efficiency. The present disclosure may provide the reflective structure 15 that prevents a direct image from being generated.

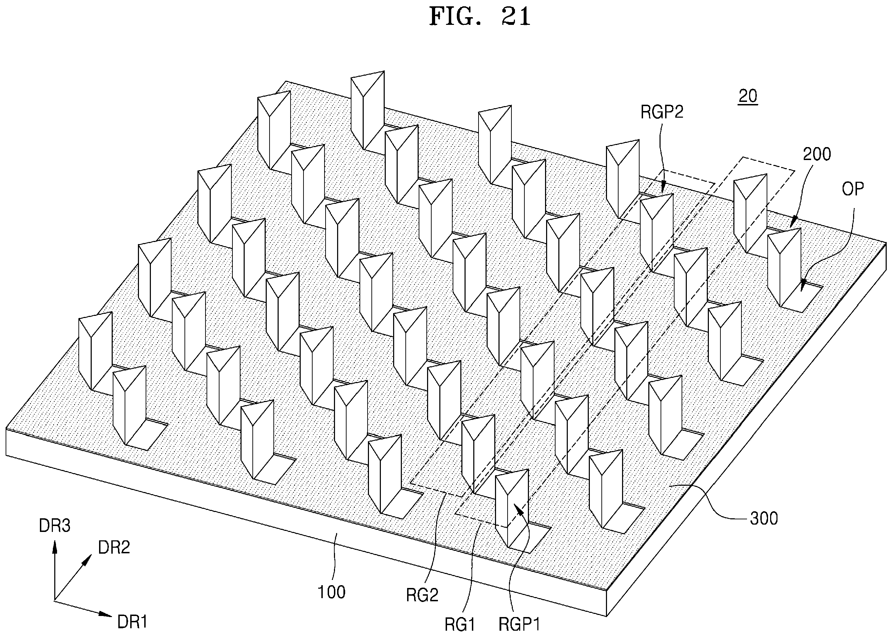

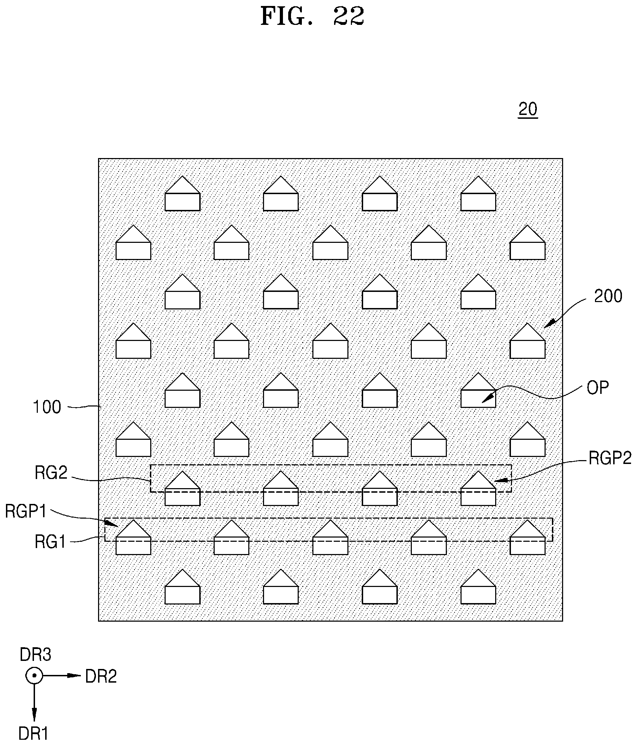

FIG. 21 is a diagram illustrating an overall shape of a reflective structure array for use in a floating image display device according to the claimed invention, according to an example embodiment. FIG. 22 is a plan view of the reflective structure of FIG. 21. For brevity of explanation, substantially the same descriptions as provided above with reference to FIGS. 1 to 3 may be omitted.

Referring to FIGS. 21 and 22, a reflective structure array 20 is provided. The reflective structure array 20 includes a substrate 100, a light blocking layer 300 including a plurality of openings OP, and a plurality of reflective pillars 200. The reflective structure array 20 may be substantially the same as the reflective structure 10 described with reference to FIGS. 1 to 3, except that the openings OP and the reflective pillars 200 are provided. However, in another example, the reflective structure array 20 may be an array of at least one of the reflective structures 11, 12, 13, 14, and 15 described above. Hereinafter, the arrangement of the openings OP and the reflective pillars 200 will be described.

The reflective pillars 200 include a plurality of first reflective groups RG1 and a plurality of second reflective groups RG2, which are alternately arranged in the first direction DR1. The first reflective groups RG1 may each include first reflective pillars RGP1 arranged in the second direction DR2. For example, the first reflective pillars RGP1 may be arranged at regular intervals. The second reflective groups RG2 may each include second reflective pillars RGP2 arranged in the second direction DR2. For example, the second reflective pillars RGP2 may be arranged at regular intervals. For example, the distance between the reflective pillars 200 may be equal to or less than twice the height of the reflective pillars 200. For example, the distance between the front surfaces (210e of FIGS. 1 to 3) of the reflective pillars 200 may be equal to or greater than 0.3 times the height of the reflective pillars 200.

The first reflective groups RG1 and the second reflective groups RG2 may be alternately arranged. For example, when viewed from the first direction DR1, the second reflective pillars RGP2 may be provided between the first reflective pillars RGP1. For example, the first reflective pillars RGP1 and the second reflective pillars RGP2 in the first reflective group RG1 and the second reflective group RG2, which are immediately adjacent to each other, may be arranged in a zigzag shape in the second direction DR2.

In the present disclosure, the minimum distance between the reflective pillars 200 may be the distance between the first reflective pillar RGP1 in the first reflective group RG1 and the second reflective pillar RGP2 in the second reflective group RG2 immediately adjacent thereto.

The openings OP are respectively provided in areas adjacent to the reflective pillars 200. For example, the openings OP may be respectively provided next to the front surfaces (210e of FIGS. 1 to 3) of the reflective pillars 200. The openings OP may not overlap the reflective pillars 200 in the third direction DR3. In the present disclosure, a floating image may be generated by using light emitted to the outside of the reflective pillars 200 through the upper surfaces (210a of FIGS. 1 to 3) of the reflective pillars 200 and light emitted to the outside of the reflective pillars 200 through the front surfaces (210e of FIGS. 1 to 3) of the reflective pillars 200. Accordingly, the reflective structure array 20 having high efficiency may be provided. The light blocking layer 300 of the present disclosure may selectively block light that does not travel toward the bottom surfaces (210b of FIGS. 1 to 3) and the front surfaces (210e of FIGS. 1 to 3) of the reflective pillars 200. Accordingly, the generation of a direct image may be prevented.

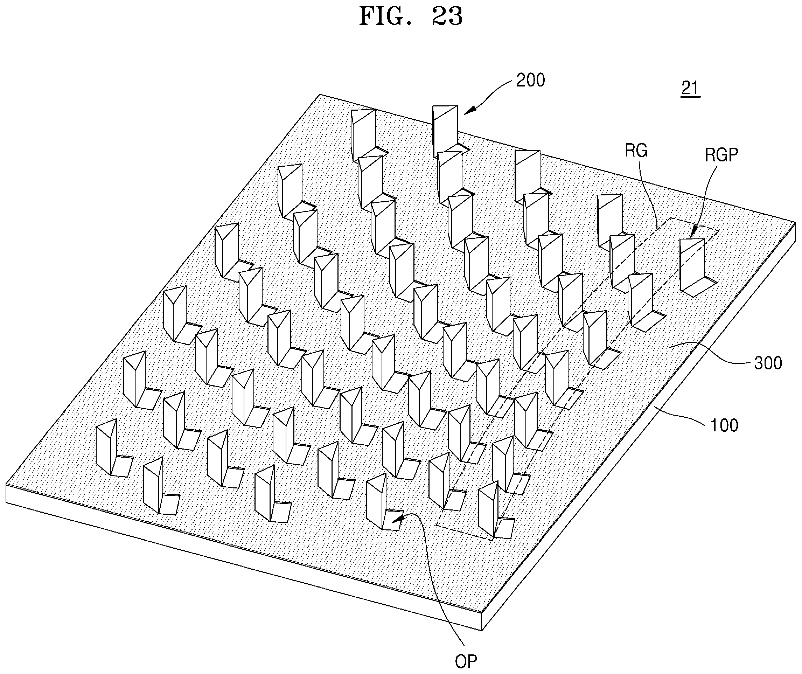

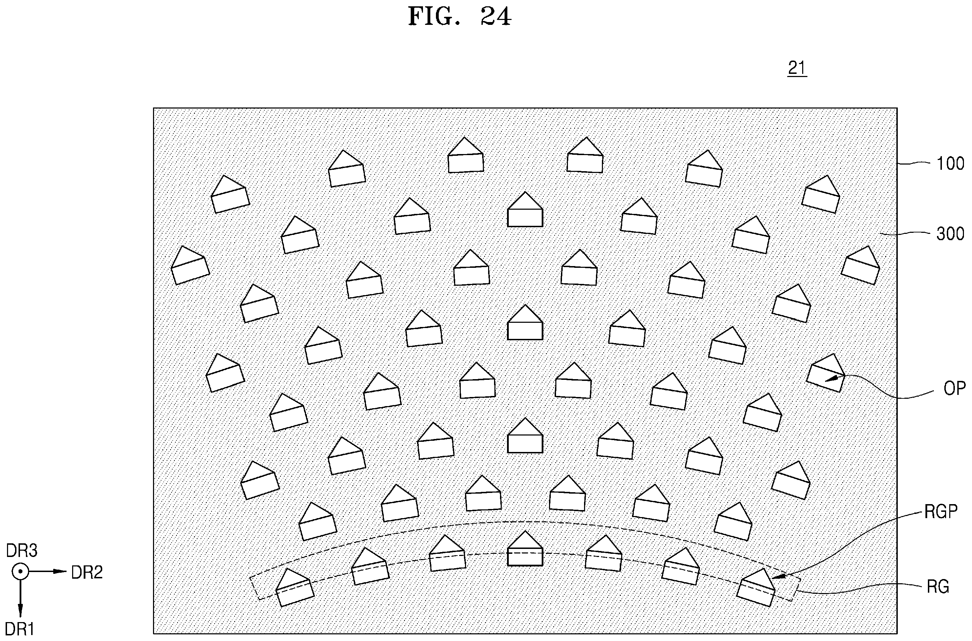

FIG. 23 is a diagram illustrating an overall shape of a reflective structure array for use in a floating image display device according to the claimed invention, according to an example embodiment. FIG. 24 is a plan view of the reflective structure of FIG. 23. For brevity of explanation, substantially the same descriptions as provided above with reference to FIGS. 1 to 3 may be omitted.

Referring to FIGS. 23 and 24, a reflective structure array 21 is provided. The reflective structure array 21 includes a substrate 100, a light blocking layer 300 including a plurality of openings OP, and a plurality of reflective pillars 200. The reflective structure array 21 may be substantially the same as the reflective structure 10 described above with reference to FIGS. 1 to 3, except that the openings OP and the reflective pillars 200 are provided. However, in another example, the reflective structure array 21 may be an array of at least one of the reflective structures 11, 12, 13, 14, and 15 described above. Hereinafter, the arrangement of the openings OP and the reflective pillars 200 will be described.

The reflective pillars 200 may be radially arranged. The reflective pillars 200 may include a plurality of reflective groups RG spaced apart from a virtual point by different distances. One reflective group RG may include reflective pillars RGP spaced apart from the virtual point by the same distance. The reflective pillars RGP in one reflective group RG may be arranged along a virtual arc centering on the virtual point. For example, the distance between the reflective pillars 200 may be equal to or less than twice the height of the reflective pillars 200. For example, the distance between the front surfaces of the reflective pillars 200 may be equal to or greater than 0.3 times the height of the reflective pillars 200.

The openings OP are respectively provided in areas adjacent to the reflective pillars 200. For example, the openings OP may be respectively provided next to the front surfaces (210e of FIGS. 1 to 3) of the reflective pillars 200. The openings OP may not overlap the reflective pillars 200 in the third direction DR3. The present disclosure may provide the reflective structure array 21 having high efficiency. The present disclosure may provide the reflective structure array 21 that generates a floating image with high sharpness by preventing a direct image from being generated.

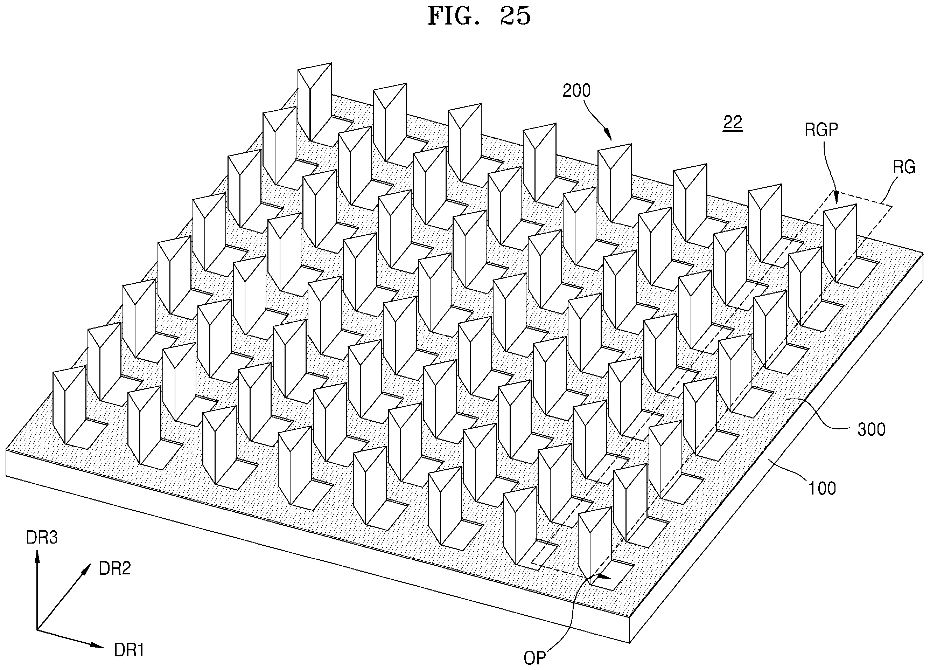

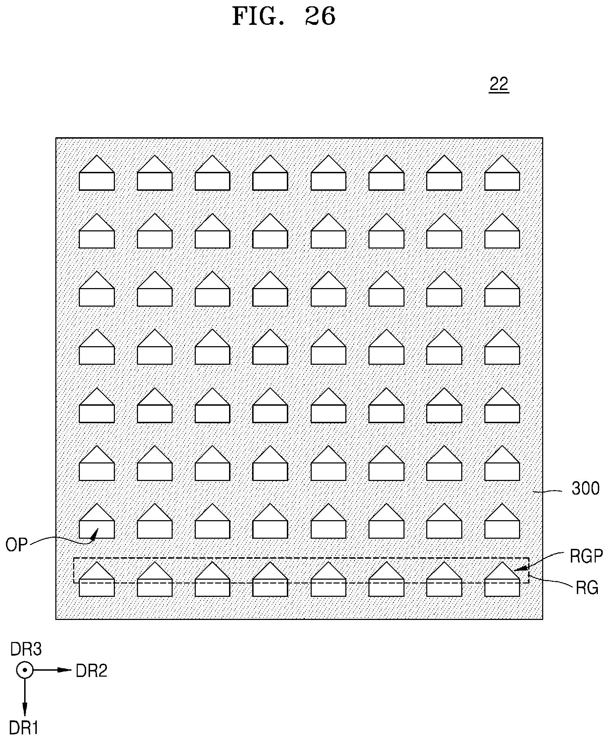

FIG. 25 is a diagram illustrating an overall shape of a reflective structure array for use in a floating image display device according to the claimed invention, according to an example embodiment. FIG. 26 is a plan view of the reflective structure of FIG. 25. For brevity of explanation, substantially the same descriptions as provided above with reference to FIGS. 1 to 3 may be omitted.

Referring to FIGS. 25 and 26, a reflective structure array 22 is provided. The reflective structure array 22 includes a substrate 100, a light blocking layer 300 including a plurality of openings OP, and a plurality of reflective pillars 200. The reflective structure array 22 may be substantially the same as the reflective structure 10 described with reference to FIGS. 1 to 3, except that the openings OP and the reflective pillars 200 are provided. However, in another example, the reflective structure array 22 may be an array of at least one of the reflective structures 11, 12, 13, and 15 described above. Hereinafter, the arrangement of the openings OP and the reflective pillars 200 will be described.

The reflective pillars are arranged in the first direction DR1 and the second direction DR2. For example, the reflective pillars 200 may be arranged at regular intervals. In the present disclosure, the minimum distance between the reflective pillars 200 may be the distance between a pair of reflective pillars RGP immediately adjacent to each other in the first direction DR1 or the distance between a pair of reflective pillars RGP immediately adjacent to each other in the second direction DR2. For example, the distance between the reflective pillars 200 may be equal to or less than twice the height of the reflective pillars 200. For example, the distance between the front surfaces of the reflective pillars 200 may be equal to or greater than 0.3 times the height of the reflective pillars 200.

The reflective pillars 200 may include a plurality of reflective groups RG arranged in the first direction DR1. The reflective groups RG may each include reflective pillars RGP arranged in the second direction DR2.

For example, the reflective pillars RGP may be arranged at regular intervals. The reflective pillars RGP in the different reflective groups RG may overlap each other in the second direction DR2.

The openings OP may be respectively provided in areas adjacent to the reflective pillars 200. For example, the openings OP may be respectively provided next to the front surfaces (210e of FIGS. 1 to 3) of the reflective pillars 200. The openings OP may not overlap the reflective pillars 200 in the third direction DR3. The present disclosure may provide the reflective structure array 22 having high efficiency. The present disclosure may provide the reflective structure array 22 that generates a floating image with high sharpness by preventing a direct image from being generated.

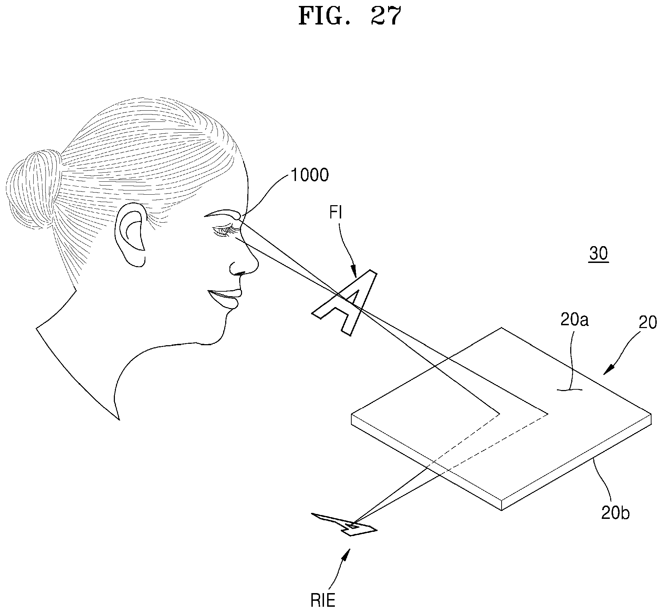

FIG. 27 is a conceptual diagram of a floating image display device according to an example embodiment. For brevity of explanation, substantially the same descriptions as provided above with reference to FIGS. 21 to 26 may be omitted.

Referring to FIG. 27, a floating image display device 30 is provided. The floating image display device 30 includes a reflective structure array 20 and a real image element RIE. The reflective structure array 20 may be the reflective structure array 20 described with reference to FIGS. 21 and 22. However, the present disclosure is not limited thereto. In another example, the reflective structure array 20 may be the reflective structure array 21 described with reference to FIGS. 23 and 24 or the reflective structure array 22 described with reference to FIGS. 25 and 26.

The real image element RIE is disposed on one side of the reflective structure array 20. For example, the real image element RIE may be disposed on the second surface 100b of the substrate 100 in the reflective structure array 20. The real image element RIE emits light that generates a real image. For example, the real image element may include a real object or a display device that outputs an image. Light emitted from the real image element RIE is reflected by the reflective structure array 20. The light reflected from the reflective structure array 20 generates a floating image FI on the other side of the reflective structure array 20.

A user 1000 of the floating image display device 30 may see the floating image by seeing the reflective structure array 20 from the opposite side of the reflective structure array 20 with respect to the floating image FI.

The floating image display device 30 of the present disclosure generates the floating image.

The present disclosure is not limited to the above embodiments, and it is apparent to those of ordinary skill in the art that various modifications and changes may be made within the scope of the invention as defined in the appended claims.

## Claims

1. A floating image display device (30) comprising:
a real image element (RIE) configured to output light that generates a real image; and
a reflective structure array (20) configured to generate a floating image (FI) by reflecting the light output from the real image element,
wherein the reflective structure array comprises:
a substrate (100);
a plurality of reflective pillars (200) provided on the substrate;
wherein each reflective pillar comprises: an upper surface (210a), a bottom surface (210b), a first reflective side surface (210c) and a second reflective side surface (210d) wherein the bottom surface (210b) of the reflective pillar (210) is a surface facing a first surface (100a) of the substrate (100);
and
a first light blocking layer (310) covering the first surface (100a) of the substrate,
wherein the first light blocking layer (310) comprises a plurality of openings (OP1) exposing portions of the first surface of the substrate,
**characterised in that**:
each opening of the plurality of openings is adjacent to a corresponding reflective pillar of the plurality of reflective pillars and between the first light blocking layer and the corresponding reflective pillar of the plurality of reflective pillars,
wherein the plurality of reflective pillars and the plurality of openings immediately adjacent to each other are arranged in a first direction (DR1) parallel to the first surface of the substrate,
wherein each opening is arranged to allow a path of light entering each reflective pillar through a front surface (210e) of each reflective pillar.

2. The floating image display device of Claim 1, wherein:
the second reflective side surface (210d) is perpendicular to the first reflective side surface; and *P44727EPN1*
the front surface extends between the first reflective side surface and the second reflective side surface.

3. The floating image display device of Claim 2, wherein the front surface is planar, and wherein each reflective pillar has a triangular prism shape.

4. The floating image display device of Claim 2, wherein each reflective pillar is provided on the first surface of the substrate, and
wherein each opening is adjacent to the front surface.

5. The floating image display device of Claim 2, further comprising a second light blocking layer (320) provided on the upper surface (210a), the first reflective side surface, and the second reflective side surface of each reflective pillar.

6. The floating image display device of Claim 2, further comprising a second light blocking layer (320) provided on the upper surface (210a) of each reflective pillar.

7. The floating image display device of Claim 1, further comprising a third light blocking layer (330) provided between the bottom surface (210b) of each reflective pillar and the substrate.

8. The floating image display device of Claim 2, wherein an aspect ratio of each reflective pillar is in a range of 0.6 to 3.5, and
wherein the aspect ratio of each reflective pillar is determined by the following equation: $aspect ratio = \left(height of the reflective pillar\right) / \left(width of the first reflective side surface\right) .$

9. The floating image display device of Claim 1, wherein a distance between adjacent reflective pillars of the plurality of reflective pillars is equal to or less than twice a height of each of the plurality of reflective pillars.

10. The floating image display device of Claim 1, wherein a distance between the front surfaces of adjacent reflective pillars of the plurality of reflective pillars is equal to or greater than 0.3 times a height of each of the plurality of reflective pillars.

11. The floating image display device of Claim 1, wherein the plurality of reflective pillars comprise a plurality of first reflective groups (RG1) arranged in the first direction, and
wherein the plurality of first reflective groups each comprise a plurality of first reflective pillars arranged in a second direction (DR2).

## Patentansprüche

1. Anzeigevorrichtung für schwebendes Bild (30), umfassend:
ein reales Bildelement (RIE), das dazu konfiguriert ist, Licht auszugeben, das ein reales Bild erzeugt; und
ein reflektierendes Strukturarray (20), das dazu konfiguriert ist, ein schwebendes Bild (FI) zu erzeugen, indem das Licht, das von dem realen Bildelement ausgegeben wird, reflektiert wird,
wobei das reflektierende Strukturarray Folgendes umfasst:
ein Substrat (100);
eine Vielzahl von reflektierenden Säulen (200), die an dem Substrat bereitgestellt ist;
wobei jede reflektierende Säule Folgendes umfasst: eine obere Fläche (210a), eine untere Fläche (210b), eine erste reflektierende Seitenfläche (210c) und eine zweite reflektierende Seitenfläche (210d), wobei die untere Fläche (210b) der reflektierenden Säule (210) eine Fläche ist, die einer ersten Fläche (100a) des Substrats (100) zugewandt ist;
und
eine erste Lichtblockierschicht (310), welche die erste Fläche (100a) des Substrats bedeckt,
wobei die erste Lichtblockierschicht (310) eine Vielzahl von Öffnungen (OP1) umfasst, die Abschnitte der ersten Fläche des Substrats freilegt,
**dadurch gekennzeichnet, dass**:
jede Öffnung aus der Vielzahl von Öffnungen benachbart zu einer entsprechenden reflektierenden Säule aus der Vielzahl von reflektierenden Säulen und zwischen der ersten Lichtblockierschicht und der entsprechenden reflektierenden Säule aus der Vielzahl von reflektierenden Säulen ist,
wobei die Vielzahl von reflektierenden Säulen und die Vielzahl von Öffnungen unmittelbar benachbart zueinander in einer ersten Richtung (DR1) parallel zu der ersten Fläche des Substrats angeordnet sind,
wobei jede Öffnung dazu angeordnet ist, einen Lichtweg zu ermöglichen, der in jede reflektierende Säule durch eine Vorderfläche (210e) jeder reflektierenden Säule eintritt.

2. Anzeigevorrichtung für schwebendes Bild nach Anspruch 1, wobei:
die zweite reflektierende Seitenfläche (210d) senkrecht zu der ersten reflektierenden Seitenfläche ist; und
sich die Vorderfläche zwischen der ersten reflektierenden Seitenfläche und der zweiten reflektierenden Seitenfläche erstreckt.

3. Anzeigevorrichtung für schwebendes Bild nach Anspruch 2, wobei die Vorderfläche planar ist, und
wobei jede reflektierende Säule eine dreieckige Prismenform aufweist.

4. Anzeigevorrichtung für schwebendes Bild nach Anspruch 2, wobei jede reflektierende Säule auf der ersten Fläche des Substrats bereitgestellt ist, und
wobei jede Öffnung benachbart zu der Vorderfläche ist.

5. Anzeigevorrichtung für schwebendes Bild nach Anspruch 2, ferner umfassend eine zweite Lichtblockierschicht (320), die auf der oberen Fläche (210a), der ersten reflektierenden Seitenfläche und der zweiten reflektierenden Seitenfläche jeder reflektierenden Säule bereitgestellt ist.

6. Anzeigevorrichtung für schwebendes Bild nach Anspruch 2, ferner umfassend eine zweite Lichtblockierschicht (320), die auf der oberen Fläche (210a) jeder reflektierenden Säule bereitgestellt ist.

7. Anzeigevorrichtung für schwebendes Bild nach Anspruch 1, ferner umfassend eine dritte Lichtblockierschicht (330), die zwischen der unteren Fläche (210b) jeder reflektierenden Säule und dem Substrat bereitgestellt ist.

8. Anzeigevorrichtung für schwebendes Bild nach Anspruch 2, wobei ein Aspektverhältnis jeder reflektierenden Säule in einer Spanne von 0,6 bis 3,5 ist, und
wobei das Aspektverhältnis jeder reflektierenden Säule durch die folgende Gleichung bestimmt wird: 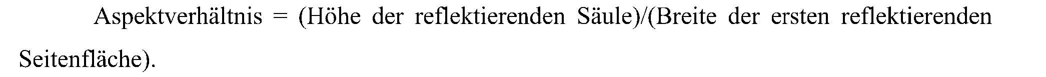 Aspektverhältnis = (Höhe der reflektierenden Säule)/(Breite der ersten reflektierenden Seitenfläche).

9. Anzeigevorrichtung für schwebendes Bild nach Anspruch 1, wobei ein Abstand zwischen benachbarten reflektierenden Säulen aus der Vielzahl von reflektierenden Säulen gleich oder weniger als das Doppelte einer Höhe von jeder aus der Vielzahl von reflektierenden Säulen ist.

10. Anzeigevorrichtung für schwebendes Bild nach Anspruch 1, wobei ein Abstand zwischen den Vorderflächen von benachbarten reflektierenden Säulen aus der Vielzahl von von reflektierenden Säulen gleich oder größer als das 0,3-fache einer Höhe von jeder aus der Vielzahl von reflektierenden Säulen ist.

11. Anzeigevorrichtung für schwebendes Bild nach Anspruch 1, wobei die Vielzahl von reflektierenden Säulen eine Vielzahl von ersten reflektierenden Gruppen (RG1) umfasst, die in der ersten Richtung angeordnet ist, und
wobei die Vielzahl von ersten reflektierenden Gruppen jeweils eine Vielzahl von ersten reflektierenden Säulen umfasst, die in einer zweiten Richtung (DR2) angeordnet ist.

## Revendications

1. Dispositif d'affichage d'image flottante (30) comprenant :
un élément d'image réelle (RIE) configuré pour émettre en sortie de la lumière qui génère une image réelle ; et
un réseau de structures réfléchissantes (20) configuré pour générer une image flottante (FI) en réfléchissant la lumière émise en sortie par l'élément d'image réelle,
dans lequel le réseau de structures réfléchissantes comprend :
un substrat (100) ;
une pluralité de piliers réfléchissants (200) ménagés sur le substrat ;
dans lequel chaque pilier réfléchissant comprend : une surface supérieure (210a), une surface inférieure (210b), une première surface latérale réfléchissante (210c) et une seconde surface latérale réfléchissante (210d) dans lequel la surface inférieure (210b) du pilier réfléchissant (210) est une surface faisant face à une première surface (100a) du substrat (100) ;
et
une première couche de blocage de lumière (310) recouvrant la première surface (100a) du substrat,
dans lequel la première couche de blocage de lumière (310) comprend une pluralité d'ouvertures (OP1) exposant des parties de la première surface du substrat,
**caractérisé en ce que** :
chaque ouverture de la pluralité d'ouvertures est adjacente à un pilier réfléchissant correspondant de la pluralité de piliers réfléchissants et entre la première couche de blocage de lumière et le pilier réfléchissant correspondant de la pluralité de piliers réfléchissants,
dans lequel la pluralité de piliers réfléchissants et la pluralité d'ouvertures immédiatement adjacentes les unes aux autres sont agencés dans une première direction (DR1) parallèle à la première surface du substrat,
dans lequel chaque ouverture est agencée pour permettre à un trajet de lumière d'entrer dans chaque pilier réfléchissant à travers une surface avant (210e) de chaque pilier réfléchissant.

2. Dispositif d'affichage d'image flottante de la revendication 1, dans lequel :
la seconde surface latérale réfléchissante (210d) est perpendiculaire à la première surface latérale réfléchissante ; et
la surface avant s'étend entre la première surface latérale réfléchissante et la seconde surface latérale réfléchissante.

3. Dispositif d'affichage d'image flottante de la revendication 2, dans lequel la surface avant est plane, et
dans lequel chaque pilier réfléchissant présente une forme de prisme triangulaire.

4. Dispositif d'affichage d'image flottante de la revendication 2, dans lequel chaque pilier réfléchissant est ménagé sur la première surface du substrat, et
dans lequel chaque ouverture est adjacente à la surface avant.

5. Dispositif d'affichage d'image flottante de la revendication 2, comprenant en outre une deuxième couche de blocage de lumière (320) ménagée sur la surface supérieure (210a), la première surface latérale réfléchissante et la seconde surface latérale réfléchissante de chaque pilier réfléchissant.

6. Dispositif d'affichage d'image flottante de la revendication 2, comprenant en outre une deuxième couche de blocage de lumière (320) ménagée sur la surface supérieure (210a) de chaque pilier réfléchissant.

7. Dispositif d'affichage d'image flottante de la revendication 1, comprenant en outre une troisième couche de blocage de lumière (330) ménagée entre la surface inférieure (210b) de chaque pilier réfléchissant et le substrat.

8. Dispositif d'affichage d'image flottante de la revendication 2, dans lequel un rapport d'aspect de chaque pilier réfléchissant est dans une plage de 0,6 à 3,5, et
dans lequel le rapport d'aspect de chaque pilier réfléchissant est déterminé par l'équation suivante : 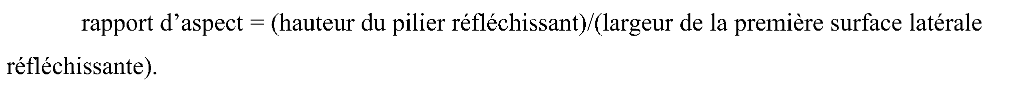 rapport d'aspect = (hauteur du pilier réfléchissant)/(largeur de la première surface latérale réfléchissante).

9. Dispositif d'affichage d'image flottante de la revendication 1, dans lequel une distance entre des piliers réfléchissants adjacents de la pluralité de piliers réfléchissants est égale ou inférieure à deux fois une hauteur de chacun de la pluralité de piliers réfléchissants.

10. Dispositif d'affichage d'image flottante de la revendication 1, dans lequel une distance entre les surfaces avant de piliers réfléchissants adjacents de la pluralité de piliers réfléchissants est égale ou supérieure à 0,3 fois une hauteur de chacun de la pluralité de piliers réfléchissants.

11. Dispositif d'affichage d'image flottante de la revendication 1, dans lequel la pluralité de piliers réfléchissants comprend une pluralité de premiers groupes réfléchissants (RG1) agencés dans la première direction, et
dans lequel la pluralité de premiers groupes réfléchissants comprennent chacun une pluralité de premiers piliers réfléchissants agencés dans une seconde direction (DR2).
